# NEUE EUROPÄISCHE PATENTSCHRIFT

(11) **EP 0 572 817 B2**
(45) Veröffentlichungstag und Bekanntmachung des Hinweises auf die Entscheidung über den Einspruch: **28.07.2004**
(45) Hinweis auf die Patenterteilung: 17.07.1996
(21) Anmeldenummer: 93107344.9
(22) Anmeldetag: 06.05.1993
(51) Int. Cl.: B23B 41/08, F16L 41/06

(54) **Anbohrarmatur und Ventil**
Fitting with drill and valve
Dérivation avec dispositif de perçage et vanne

(30) Priorität: 30.05.1992 DE 4217982
(43) Veröffentlichungstag der Anmeldung: 08.12.1993
(73) Patentinhaber: Friatec Aktiengesellschaft, 68229 Mannheim (DE)
(72) Erfinder: Freidel, Norbert, W-6833 Waghäusel (DE)
(74) Vertreter: Klose, Hans, Dipl.-Phys.

(56) Entgegenhaltungen:
- DE-A- 1 233 572
- DE-A- 1 477 238
- DE-A- 2 022 093
- DE-A- 3 744 693
- DE-A- 4 204 620
- DE-B- 1 233 572
- DE-B- 2 709 466
- DE-C- 3 704 321
- DE-C- 3 830 395
- DE-S- 2 022 093
- DE-U- 9 103 755
- DE-U- 9 204 079
- US-A- 2 839 075
- US-A- 3 896 842
- US-A- 4 063 844

## Beschreibung

Die Erfindung bezieht sich auf eine Anbohrarmatur und ein Ventil mit einem Gehäuse, welches insbesondere durch Schweißen mit einem Rohr verbindbar ist, gemäß der DE-052 022 093. Diese zeigt eine Anbohrarmatur und Ventil mit einem Geháuse, enthaltend eine Führungsbuchse und einen Ventilstutzen, in welchem ein Bohrer mit einer Ventilspindel axial bewegbar angeordnet ist, um das Rohr anzubohren und ferner bedarfsweise einen in den Ventilstutzen mündenden Abzweigstutzen abzusperren oder freizugeben. Die Führungsbuchse für den Bohrer ist mit dem Ventilstutzen verbunden und gegen axiale Bewegung und Drehung gesichert angeordnet. Die Führungsbuchse weist im Bereich des Abzweigstutzens eine Öffnung auf und weist ferner am unteren, dem Rohr zugewandten Ende, welches unterhalb des Abzweigstutzens angeordnet ist, einen Ventilsitz auf.

Aus dem DE 27 09 466 B2 ist eine Ventilund Anbohrarmatur bekannt, in deren Ventilstutzen ein Abzweigstutzen zum Anschluß einer Abzweigleitung mündet. Die Abzweigung kann beispielsweise eine Hausanschlußleitung sein, welche über die bekannte Vorrichtung an eine Hauptleitung angeschlossen ist. In den Ventilstutzen ist ein Ventiloberteil eingeschraubt, in welchem eine Gewindebuchse sowie eine Führungsbuchse eingeschraubt sowie axial verschiebbar angeordnet sind. Diese beiden Buchsen umgeben die Ventilspindel und werden beim Anbohren des Rohres mit der Ventilspindel axial in Richtung auf das Rohr bewegt und anschließend mittels einer besonderen Sperreinrichtung im Ventiloberteil axial festgelegt. Die genannten Bauteile bestehen aus Metall und enthalten eine Anzahl von ineinandergreifenden Gewinden sowie Sperrteilen. Hierdurch ist nicht nur ein entsprechender Fertigungsaufwand bedingt, sondern die erhebliche Gefahr von Korrosionsschäden gegeben, so daß im Hinblick auf die Verlegung derartiger Armaturen samt Rohrleitungen im Erdreich und die lange Nutzungsdauer von vielen Jahrzehnten schon nach wenigen Jahren die Betätigbarkeit des Ventils in Frage steht. Zwischen dem Ventiloberteil und dem Ventilsitz ist eine vergleichsweise große freie Kammer vorhanden, welche von der Ventilspindel durchdrungen wird und aus welcher der Abzweigstutzen herausgeführt ist. Die Führung der Ventilspindel erfolgt im Ventiloberteil, so daß insgesamt eine erhebliche Baulänge des Ventilstutzens mit dem Ventiloberteil und den genannten Buchsen vorhanden ist. Das Ventilgehäuse muß aufgrund des vergleichsweise großen Abstandes zwischen dem Ventilsitz und der Spindelführungsbuchse recht steif ausgebildet sein, damit eine Beschädigung des Ventilsitzes durch den Bohrer beim Anbohren vermieden wird. Schließlich muß unter Berücksichtigung des großen Abstandes zwischen der Führungsbuchse und dem Ventilsitz durch eine stabile Ausbildung gewährleistet sein, daß ein Abheben des Ventilkörpers vom Ventilsitz und damit ein Undichtwerden beim Einwirken von äußeren Kräften auf das Ventiloberteil vermieden wird.

Ferner ist aus der DE 38 30 395 C1 eine Anbohrarmatur bekannt, welche ausschließlich zum Anbohren eines Rohres dient und mit welcher keine Ventilfunktion ermöglicht wird. Diese Anbohrarmatur enthält einen Stutzen, in welchen ein Abzweigstutzen mündet, wobei in den erstgenannten Stutzen eine zylindrische Hülse integriert ist. Das untere Ende der Hülse befindet sich im Bereich des Abzweigstutzens. In der Hülse ist ein Bohrer über eine Gewindeführung axial verschiebbar angeordnet. Zum Anbohren des Rohres wird oben auf den Stutzen eine Vorrrichtung mit einer Bohrspindel angeordnet, welche ihrerseits mit dem Bohrer zu dessen Betätigung in Eingriff gebracht wird. Nach dem Anbohren wird die genannte Vorrichtung entfernt und der Stutzen an seinem freien Ende mit einem Stopfen dicht verschlossen. Diese Anbohrarmatur kann nicht ohne weiteres als Ventil benutzt werden, zumal weder ein Ventilsitz noch ein Ventilkörper vorgesehen sind, um bedarfsweise den Strömungsweg zwischen dem Inneren des Rohres und dem Abzweigstutzen abzusperren oder freizugeben.

Ferner ist aus der DE 37 44 693 A1 eine Ventilanbohrschelle bekannt, welche eine Schale mit einem integral angeformten und vertikal ausgerichteten Stutzen aufweist. Diese Schale besteht ebenso wie die Rohrleitung aus PVC. Der genannte vertikale Stutzen enthält eine Stufenbohrung mit einem Gewinde, in welchem ein T-förmiger Einsatzkörper aus Messing lösbar befestigt ist. Dieser Einsatzkörper besitzt einen seitlichen Abzweigstutzen und ferner koaxial zur Stufenbohrung am oberen Ende eine weitere Bohrung, in welche eine Spindelhülse einschraubbar ist. Innerhalb der Spindelhülse ist über ein Innengewinde ein Tragkörper für einen Bohrer drehbar angeordnet. Aus der Spindelhülse ist ferner am oberen Ende eine Spindel herausgeführt, bei deren Drehung über den genannten Tragkörper der Bohrer axial bewegbar ist. Die Ventilanbohrstelle besteht aus einer Mehrzahl von Bauteilen, welche jeweils in geeigneter Weise gegeneinander abgedichtet sein müssen, wodurch ein nicht unerheblicher Fertigungs- und Montageaufwand erforderlich ist. Der Einsatzkörper sowie die Spindelhülse bestehen aus Metall und sind somit korrosiven Einwirkungen, insbesondere bei Verlegung im Erdreich, ausgesetzt, so daß die funktionssichere Betätigung des Bohrers mit integriertem Ventilkörper für eine lange Lebensdauer nicht sichergestellt werden kann. Schließlich weist die vorbekannte Ventilanbohrschelle eine erhebliche Bauhöhe auf und es sind zusätzliche Maßnahmen erforderlich, um beim Verlegen der Rohrleitung oder nachträglichen Baumaßnahmen eine Beschädigung zu verhindern.

Der Erfindung liegt die Aufgabe zugrunde, die Anbohrarmatur mit integriertem Ventil der genannten Art mit geringem konstruktivem Aufwand dahingehend weiterzubilden, daß sowohl beim Anbohren als auch für die Ventilfunktion eine hohe Funktionssicherheit und Dichtheit gewährleistet wird. Die Armatur soll sich durch eine kompakte Bauweise, insbesondere eine geringe Bauhöhe auszeichnen. Die Armatur soll in einfacher Weise zu handhaben sein und die Gefahr von Montagefehlern oder Handhabungsfehlern praktisch ausschließen. Ferner soll die Armatur eine hohe Korrosionsbeständigkeit und Lebensdauer aufweisen. Der Montageaufwand soll auf ein Minimum reduziert werden und mit wenigen Bauteilen soll eine hohe Funktionssicherheit für eine lange Lebensdauer gewährleistet werden.

Die gestellte Aufgabe wird mit einer Anbohrarmatur mit den Merkmalen des Patentanspruchs 1 gelöst.

Die vorgeschlagene Anbohrarmatur mit kombiniertem Ventil zeichnet sich durch eine funktionsgerechte Konstruktion aus und gewährleistet in allen Betriebszuständen eine sichere Abdichtung gegen ein Austreten des in der Rohrleitung anstehenden Mediums. Die Führungsbuchse enthält an ihrem dem Sattel zugekehrten Ende den Ventilsitz für den zugeordneten Ventilkörper des Bohrers. Aufgrund dieser Integration des Ventilsitzes in die Führungsbuchse wird somit eine funktionssichere Abdichtung auch bei Ausbildung des Armaturengehäuses aus Kunststoff möglich, welche bekanntlich im Vergleich zu Metall eine höhere Elastizität und/oder Neigung zur plastischen Verformung aufweist. Im Vergleich zu der eingangs erwähnten Anbohrarmatur ist kein Abstand zwischen der Führungsbuchse einerseits und dem Ventilsitz andererseits vorhanden, so daß ein radialer Versatz vermieden, ein sicheres Absperren des Ventils gewährleistet und ferner bei kompakter Bauweise eine hohe Funktionssicherheit gewährleistet wird.

Die Führungsbuchse weist im Bereich des Abzweigstutzens eine Öffnung auf, durch welche nach dem Anbohren des Rohres und in der geöffneten Stellung des Ventils das Medium aus dem Inneren des Rohres in die an dem Abzweigsstutzen angeschlossene Leitung strömen kann. Der Ventilsitz ist unterhalb der genannten Öffnung in der Weise angeordnet, daß in der unteren Endstellung des Ventilkörpers das Ventil geschlossen ist und folglich kein Medium aus dem Rohr in den Abzweigstutzen strömen kann. Die Führungsbuchse ist im wesentlichen zylindrisch ausgebildet und enthält an der Innenfläche ein Innengewinde, mit welchem ein Außengewinde des Bohrers in Eingriff steht. Dieses Innengewinde der Führungsbuchse wird von der genannten Öffnung durchdrungen. Am unteren Ende der Führungsbuchse ist der genannte Ventilsitz für den Ventilkörper angeordnet, welcher Bestandteil des Bohrers ist. Der Bohrer weist am oberen Ende eine Öffnung auf, in welche die Ventilstange eingreift und befestigt ist. Der Bohrer mit integriertem Ventilkörper ist ein kompaktes, zweckmäßig einteilig ausgebildetes Bauteil und ermöglicht insgesamt eine kurze Bauhöhe des Ventilstutzens.

Abgesehen von dem Bohrer bestehen die wesentlichen Teile aus Kunststoff, so daß Korrosionsprobleme die Handhabung auch nach langer Zeit nicht in Frage stellen. Insbesondere die Spindel zum Eindrehen des Bohrers in die angeschweißte Rohrleitung oder zum Betätigen des integrierten Ventils besteht aus Kunststoff ebenso wie die Kappe, durch welche die Spindel abgedichtet nach außen geführt ist. Die zweckmäßig aus Metall bestehende Führungsbuchse dient zur direkten Führung des Bohrers und umgibt diesen. Ferner ist sie fest in den Ventilstutzen integriert und wird nach außen vollständig vom Kunststoff umgeben. Die Führungsbuchse enthält radial außen Verankerungsstege, welche eine zuverlässige Festlegung zumindest in axialer Richtung sowie gegebenenfalls in Umfangsrichtung im Ventilstutzen sicherstellen. Zur Drehsicherung weist die Führungsbuchse zweckmäßig die Außenkontur eines Vieleckes auf, insbesondere eines Sechseckes. Die Führungsbuchse enthält das Innengewinde, in welches der Bohrer mit seinem Außengewinde zwecks unmittelbarer Führung eingreift. Der Bohrer besitzt eine gestufte Außenkontur, wobei ein oberer Teil das Außengewinde aufweist. Ein unterer Teil des Bohrers ist mit einer Schneide oder dergleichen versehen, wobei in abgesperrten Zustand des Ventils, dieser untere Teil aus der Führungsbuchse herausragt.

Zur Gewährleistung der Sicherheit sind mehrere Dichtzonen vorhanden, mittels welchen einerseits beim Anbohren und andererseits nachfolgend bei freigegebenem oder bei abgesperrtem Abzweigstutzen und der daran angeschlossenen Abzweigleitung kein Medium nach außen dringen kann. Der aus Metall bestehende Bohrer ist mit der einteiligen und aus Kunststoff bestehenden Spindel axial festgelegt und gegen Drehung gesichert. Die Kappe wird in zweckmäßiger Weise werksseitig durch Schweißen mit dem Ventilstutzen verbunden, so daß später eine unsachgemäße Manipulation ausgeschlossen wird, bei welcher beispielsweise die Dichtungsringe verloren gehen oder Dichtflächen beschädigt werden könnten. Die werksseitige Verschweißung der Kappe mit dem Ventilstutzen gewährleistet bei minimalem Fertigungsaufwand und Materialeinsatz eine funktionsgerechte Verbindung für die gesamte Lebensdauer der Vorrichtung von vielen Jahren und Jahrzehnten.

Weiterbildungen und besondere Ausgestaltungen der Erfindung sind in den Unteransprüchen angegeben.

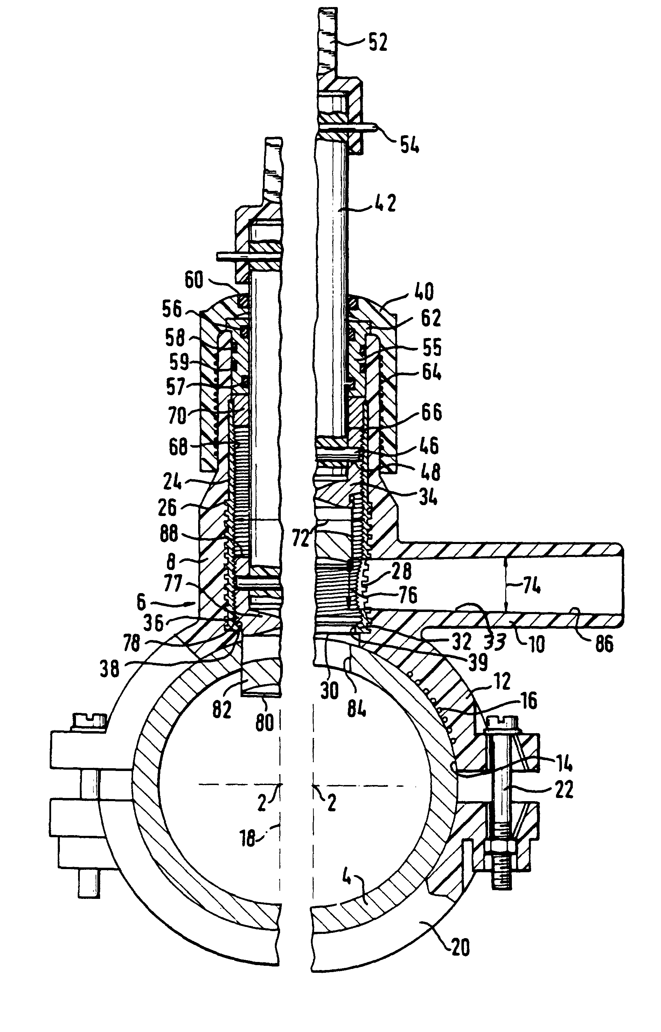

Ein Ausführungsbeispiel der Erfindung wird nachfolgend anhand der Zeichnung näher erläutert.

Die Zeichnung zeigt quer zur Längsachse 2 eines Rohres 4 einen Schnitt durch die kombinierte Ventil- und Anbohrarmatur mit einem Gehäuse 6, wobei ein Bohrer in der linken Hälfte in das Rohr 4 eingedreht und in der rechten Hälfte herausgedreht ist. Das Gehäuse enthält einen Ventilstutzen 8, in welchen ein Abzweigstutzen 10 zum Anschluß einer Abzweigungsleitung mündet. Dem Rohr 4 zugekehrt enthält das Gehäuse 6 einen Sattel 12, in dessen Innenfläche 14 eine Heizwicklung 16 angeordnet ist. Diese Heizwicklung 16 liegt in bekannter Weise konzentrisch zur Achse 18 des Ventilstutzens 8. Zusammen mit einer Unterschelle 20 ist der Sattel 12 in bekannter Weise mittels Schrauben 22 auf der Außenfläche des Rohres 4 befestigt, wobei mittels der Heizwicklung 16 eine dichte Verbindung mit dem Rohr 4 erfolgt.

In den Ventilstutzen 8 ist eine Führungsbuchse 24 integriert, welche radial außen Verankerungsstege 26 enthält. Die Führungsbuchse 24 besteht aus Metall, und zwar insbesondere aus Messing. Im Querschnitt betrachtet weist die Außenfläche der Führungsbuchse 24 die Form eines Vieleckes, insbesondere eines Sechseckes auf, wodurch in zweckmäßiger Weise die Drehsicherung im Ventilstutzen 8 erfolgt. Die Verankerungsstege 26 sind durch Einbringen von radialen Schnitten oder durch Abdrehen der beispielsweise als Sechskant ausgebildeten Außenflächen der Führungsbuchse 24 hergestellt. Die Verankerungsstege 26 sind zweckmäßig als radial von der Außenfläche der Führungsbuchse 24 vorstehende Ringe oder dergleichen ausgebildet und werden bei der Herstellung des Gehäuses 6 vom Kunststoff umspritzt und in diesen funktionssicher eingebettet. Aufgrund der ringförmigen Verankerungsstege 26 sowie dem zwischen diesen vorhandenen Kunststoff wird in zweckmäßiger Weise eine Abdichtung gewährleistet, so daß das Medium nicht zwischen der Außenfläche der Führungsbuchse 24 und dem Kunststoff des Ventilstutzens 8 entlang kriechen und entweichen kann.

Die Führungsbuchse 24 erstreckt sich über einen wesentlichen Teil der Gesamthöhe des Ventilstutzens 8. Im Bereich des Abzweigstutzens 10 besitzt die Führungsbuchse 24 eine Öffnung 28 und sie erstreckt sich mit ihrem unteren Ende 30 bis in den Sattel 12 praktisch in unmittelbarer Nähe der Außenfläche des Rohres 4. Dort ist ferner ein Ventilsitz 32 in die Führungsbuchse 24 integriert. Der Ventilsitz 32 liegt unterhalb der Unterkante 33 des Abzweigstutzens 10. Wie aus dem linken Teil der Zeichnung ersichtlich, liegt der Bohrer 34 mit seinem integrierten Ventilkörper 36 dichtend an dem Ventilsitz 32. Ferner enthält der Bohrer 34, insbesondere am radial innenliegenden Ende des Ventilkörpers 36, in einer Ringnut einen Dichtring 38. Dieser Dichtring 38 ist auf den Durchmesser einer insbesondere zylindrischen Dichtfläche 39 am unteren Ende 30 bzw. am Ventilsitz 32 abgestimmt. Insgesamt wird eine äußerst niedrige Leckrate mit dem derart kombinierten und ausgebildeten Ventil sichergestellt. Der Ventilsitz 32 ist am unteren Ende 30 der Führungsbuchse 24 angeordnet, welche im wesentlichen zylindrisch ausgebildet ist, wobei nur der Ventilsitz 32 einen kleineren Durchmesser als die übrige Innenfläche der Führungsbuchse 24 aufweist.

Der Ventilstutzen 8 ist an seinem von der Längsachse 2 abgewandten Ende mittels einer Kappe 40 abgeschlossen, durch welche eine Ventilspindel 42 hindurchgeführt ist. Die Kappe 40 ist mit der Außenfläche des Ventilstutzens 8 flüssigkeitsdicht und unlösbar verbunden. Es wird bevorzugt durch eine Schweißverbindung dauerhaft verhindert, daß Feuchtigkeit von außen, beispielsweise aus dem umgebenden Erdreich, nach innen in den Ventilstutzen gelangt und dort Korrosionsschäden verursacht. Innerhalb des Ventilstutzens 8 ist mit dem dortigen Ende der Ventilspindel 42 der aus Metall bestehende Bohrer 34 über einen Stift 46 verbunden. Dieser Stift 46 durchdringt eine Querbohrung der aus Kunststoff bestehenden Spindel 42 und greift mit seinen beiden Enden jeweils in radiale Bohrungen 48 des Bohrers 34. Aufgrund der Ausbildung der Spindel aus Kunststoff ergeben sich keinerlei Korrosionsschwierigkeiten, die bekanntlich bei Metallspindeln zu erwarten sind, wenn diese nach dem Verlegen im Erdreich der Feuchtigkeit ausgesetzt sind. Auch nach Jahren läßt sich die Spindel problemlos betätigen, um die Abzweigleitung abzusperren. An ihrem äußeren freien Ende ist die Spindel 42 mit einem Vierkant 52 mittels eines Stiftes 54 befestigt. Wie ersichtlich, dient der Vierkant in bekannter Weise zum Ansetzen eines Werkzeuges zum Betätigen der Spindel 42. Die Verbindung zwischen der aus Kunststoff bestehenden Spindel 42 und dem Vierkant 52 mittels des Stiftes 54 ist als eine Sollbruchstelle ausgebildet, so daß bei unsachgemäßer Betätigung der Stift 54 bricht, der Vierkant von der Spindel 42 sich löst und damit die üblicherweise mit dem Rohr 4 im Erdreich verlegte Vorrichtung nicht beschädigt wird. Die Vorrichtung ist korrosionsfrei, da das Gehäuse 6 ebenso wie die Kappe 40 und die Spindel 42 aus Kunststoff bestehen. Abgesehen von der Führungsbuchse 24 und dem Bohrer 34 aus Metall, bestehen die wesentlichen Teile der Vorrichtung aus Kunststoff, so daß auch beim Einwirken von aggressiven und/oder korrosiven Einflüssen eine lange Lebensdauer gewährleistet wird.

Zur Abdichtung der axial verschiebbaren Spindel 42 ist diese von einem Ringkörper 55 umgeben, welcher oben in den Ventilstutzen 8 eingesetzt ist und dort mittels der Kappe 40 festgelegt ist. Der Ringkörper 55 enthält wenigstens in einer Ringnut einen Dichtring 56, 57, der in der dargestellten Weise an der zylindrischen Außenfläche der Spindel 42 dichtend anliegt. Zur Abdichtung gegenüber dem Ventilstutzen 8 enthält der Ringkörper 55 außen wenigstens einen, zweckmäßig zwei Dichtungen 58, 59. Ferner ist im Bereich der Außenseite der Kappe 40 ein Abstreifring 60 angeordnet, um zum einen das Eindringen von Fremdkörpern oder Schmutz in den Bereich der Dichtflächen der Dichtringe 56, 57 zu verhindern und zum anderen eine zusätzliche Dichtfunktion auszuüben. Wie dargestellt, übergreift die Kappe 40 den Ventilstutzen 8 und einen Flansch 62 des Ringkörpers 55, welcher somit axial festgelegt ist. Insgesamt wird in besonders zweckmäßiger Weise bei kurzer Gesamtbaulänge des Ventilstutzens und der Kappe 40 einerseits die Unterbringung des bzw. der Dichtringe 56 bis 59 ermöglicht und andererseits eine hinreichend große Außenfläche des Ventilstutzens 8 zum Verschweißen mit der Kappe geschaffen. Die Kappe 40 weist auf ihrer Innenfläche eine Schweißwicklung 64 auf, um nach dem Zusammenbau der Spindel 42 und des Bohrers 34 werksseitig eine dauerhafte und dichte Verbindung zu schaffen.

Der aus Metall hergestellte Bohrer 34 dient einerseits zum Anbohren des Rohres 4 und andererseits als Ventilkörper, um ggfs. den Abzweigstutzen 10 bezüglich des Rohres 4 abzusperren. Der in Drehrichtung sowie axial fest mit der Spindel 42 gekoppelte Bohrer 34 weist ein Außengewinde 66 auf, welches im Innengewinde 68 der Führungsbuchse 24 beim Drehen der Spindel 42 gleichfalls dreht und in Richtung der Achse 18 bewegbar ist. Die Führungsbuchse 24 mit dem Innengewinde 68 erstreckt sich über einen wesentlichen Anteil der Gesamthöhe des Ventilstutzens 8, in welchen jene in der eingangs erläuterten Weise integriert ist. Wie aus einem Vergleich der linken Hälfte mit der rechten Hälfte der Zeichnung zu entnehmen ist, kann somit bei kurzer Gesamtbaulänge des Ventilstutzens 8 und der Kappe 40 der Bohrer 34 beim Drehen der Spindel 42 einen großen Hub durchführen. In das obere freie Ende der Führungsbuchse 24 ist ein Ring 70 eingesetzt, welcher zweckmäßig gleichfalls aus Metall besteht und vor allem als oberer Endanschlag für den aus Metall bestehenden Bohrer 34 dient. Der Ring 70 ist bevorzugt über ein Außengewinde, welches in das Innengewinde 68 eingeschraubt ist, zuverlässig und fest mit der Führungsbuchse 24 verbunden. Durch diese wesentliche Ausgestaltung werden Beschädigungen beim Herausdrehen des Bohrers 34 bzw. beim Öffnen des Ventils vermieden. Dies gilt vor allem im Hinblick auf die Verbindung der Kappe 40 mit dem Ventilstutzen 8, wobei diese Verbindung aufgrund des Ringes praktisch kräftefrei bleibt.

Das Innengewinde 68 der Führungsbuchse erstreckt sich vom Ventilsitz 32 nach oben, und zwar in zweckmäßiger Weise über die gesamte Länge der Führungsbuchse 24. Es sei besonders darauf hingewiesen, daß die im Bereich des Abzweigstutzens 10 liegende Öffnung 24 das Innengewinde 68 durchdringt. Der Innendurchmesser 72 der Führungsbuchse 24 ist erfindungsgemäß wesentlich größer als der Innendurchmesser 74 des Abzweigstutzens 10 und/oder als der Innendurchmesser 76 der genannten Öffnung 28. Auf diese Weise ist eine sichere Führung des Bohrers 34 auch dann gewährleistet, wenn sein Außengewinde 66 auf der Höhe des Abzweigstutzens 10 bzw. im Bereich der Öffnung 28 bewegt wird. Die Führungsbuchse 24 und/oder das Innengewinde 68 weisen praktisch über die gesamte axiale Länge den gleichen Innendurchmesser 72 auf und sind lediglich am unteren Ende durch den dort vorgesehenen Ventilsitz 32 mit einem geringeren Durchmesser ausgebildet.

Der Bohrer 34 weist im Bereich seines Bodens 77 außen einen Absatz mit einer in zweckmäßiger Weise konischen Dichtfläche 78 auf, welche gemäß der linken Hälfte der Zeichnung am korrespondierenden Ventilsitz 32 der Führungsbuchse 24 dichtend anliegt. In zweckmäßiger Weise ist der Dichtring 38 in einer Ringnut des Bohrers 34 und/oder dessen Bodens 77 vorgesehen. Alternativ könnte ein vergleichbarer Dichtring im Ventilsitz 32 angeordnet sein, wobei dann zweckmäßig der Außendurchmesser des Bohrers 34 im Bereich des Bodens 77 und der dort vorgesehenen Anlagefläche für den Dichtring etwas größer ist als der Außendurchmesser der am vorderen Ende des Bohrers 34 vorgesehenen Schneide 80. Der Bohrer 4 weist eine gestufte Außenkontur auf, wobei der mit dem Außengewinde 66 versehene obere Teil einen größeren Außendurchmesser aufweist als der die Schneide 80 enthaltende untere Teil. Im Übergang zwischen dem oberen Teil mit dem Außengewinde 66 und dem unteren Teil liegt die Dichtfläche 78. Entsprechend ragt der Ventilsitz 36 von der mit dem Gewinde 68 versehenen Innenfläche der Führungsbuchse 24 radial nach innen derart, daß der untere Teil des Bohrers an der radial innenliegenden Fläche, welche bevorzugt als die Dichtfläche 39 ausgebildet ist, vorbeibewegbar ist. Die Integration des Ventilsitzes 32 und dessen Anpassung an die gestufte Außenkontur des Bohrers 34 erfordert nur einen minimalen Fertigungsaufwand, doch wird hierdurch in besonders zweckmäßiger Weise eine hohe Funktionssicherheitder Abdichtung mit zu vernachlässigender Leckrate gewährleistet.

Zwischen der Schneide 80 und dem durchgehenden Boden 77 ist ein Hohlraum vorhanden, in welchem nach dem Anbohren des Rohres 4 dessen ausgeschnittener Teil 82 festgehalten wird und somit nicht von dem durch das Rohr 4 strömenden Medium mitgenommen wird. Für die Ventilfunktion des Bohrers 34 sind somit insgesamt drei voneinander unabhängige und nacheinander geschaltete Dichtzonen zu unterscheiden. Zum einen erfolgt eine unmittelbare Abdichtung des Bohrers 34 in der Bohrung 84 des Rohres 4. Die zweite Dichtzone befindet sich zwischen dem Dichtring 38 und der zugeordneten Dichtfläche 39 am unteren Ende der Führungsbuchse 24. Eine dritte Dichtzone wird durch die feste Anlage der bevorzugt konischen Dichtfläche 78 des Bohrers 34 an dem gleichfalls konisch geneigten Ventilsitz 32 geschaffen. Der Anpreßdruck in dieser dritten Dichtzone wird beim festen Anziehen der Spindel hergestellt.

In der rechten Hälfte der Zeichnung ist die nach oben ausgefahrene Position des Bohrers 34 und der Spindel 42 dargestellt. Entsprechend der jeweiligen Stellung des oberen Endes der Spindel 42 bzw. des dort vorgesehenen Vierkantes oder dergleichen folgt unmittelbar eine Anzeige, ob das Ventil offen oder geschlossen ist. Der vorstehend bereits erwähnte axiale Hub des Bohrers wird in der Weise vorgegeben, daß die Schneide 80 nach dem Aufdrehen außerhalb des Strömungsweges des aus dem Rohr 4 in die Abzweigleitung strömenden Mediums sich befindet. Diese besondere Dimensionierung ergibt sich unmittelbar aus der rechten Hälfte der Zeichnung, gemäß welcher die Schneide 80 oberhalb der oberen Innenkante 86 des Abzweigstutzens 10 sich befindet. Auch in dieser Position sind wiederum drei voneinander unabhängige und nacheinander geschaltete Dichtzonen zu unterscheiden. Zum einen erfolgt eine Abdichtung mittels des oder der Dichtringe 56, 57 an der Spindelaußenfläche. Ferner liegt die obere Endfläche 88 des Bohrers 44 unter Vorspannung dicht an der axialen Stirnfläche des Ringes 70 an. Schließlich erfüllt auch der Abstreifring 60, welcher primär das Eindringen von Schmutz verhindern soll, eine Dichtfunktion.

Zusammenfassend sei festgehalten, daß die Ventilspindel 42 der Ventilanbohrarmatur kein Gewinde aufweist oder mit Gewindeführungen unmittelbar zusammen arbeitet, sondern eine glatte, zylindrische Außenfläche aufweist. Es ist nur eine einzige Gewindeführung vorgesehen, nämlich das Außengewinde des Bohrers 34 und das Innengewinde der im Ventilstutzen 8 verankerten Führungsbuchse 24. Die Ventilspindel, welche oben aus dem Ventilstutzen 8 und/oder der Kappe 40 herausragt, weist selbst keine Gewinde- oder Führungsfunktion auf und kann daher eine glatte Außenfläche aufweisen, wobei lediglich am unteren Ende der Bohrer 34 mit dem kombinierten Ventilkörper 36 drehfest verbunden ist. Das obere freie Ende der Ventilspindel kann entweder selbst Angriffsflächen für ein Betätigungswerkzeug aufweisen oder mit dem bereits erläuterten Vierkant 52 drehfest verbunden sein, um so die Einleitung der Drehbewegung des kombinierten Bohrers und Ventilkörpers zu ermöglichen. Da die Ventilspindel kein Gewinde aufweist, kann sie problemlos aus Kunststoff gefertigt werden, wodurch in der Praxis erhebliche Vorteile hinsichtlich der Korrosionsfestigkeit der Ventil-Anbohrarmatur erreicht werden. In zweckmäßiger Weise bestehen lediglich der Bohrer 34 mit integriertem Ventilkörper 36 sowie die in den Ventilstutzen 8 integrierte Führungsbuchse 24 aus Metall. Der Bohrer 34 mit dem Ventilkörper 36 sowie die Führungsbuchse 24 sind gekapselt und nach außen abgedichtet innerhalb des Ventilstutzens 8 angeordnet und somit zuverlässig gegen die Einwirkung eines außerhalb befindlichen aggressiven Mediums, beispielsweise der Feuchtigkeit des umgebenden Erdreiches, geschützt.

### Bezugszeichen

- 2: Längsachse
- 4: Rohr
- 6: Gehäuse
- 8: Ventilstutzen
- 10: Abzweigstutzen
- 12: Sattel
- 14: Innenfläche
- 16: Heizwicklung
- 18: Achse von 8
- 20: Unterschelle
- 22: Schraube
- 24: Führungsbuchse
- 26: Verankerungssteg
- 28: Öffnung in 24
- 30: unteres Ende von 24
- 32: Ventilsitz
- 33: Unterkante von 10
- 34: Bohrer
- 36: Ventilkörper
- 38: Dichtring
- 39: Dichtfläche an 30
- 40: Kappe
- 42: Spindel
- 46: Stift
- 48: Bohrung in 34
- 52: Vierkant
- 54: Stift
- 55: Ringkörper
- 56 bis 59: Dichtring
- 60: Abstreifring
- 62: Flansch
- 64: Schweißwicklung
- 66: Außengewinde von 34
- 68: Innengewinde von 24
- 72: Innendurchmesser von 24
- 74: Innendurchmesser von 10
- 76: Innendurchmesser von 28
- 77: Boden von 34
- 78: Dichtfläche
- 80: Schneide von 34
- 82: Teil von 4
- 84: Bohrung in 4
- 86: Innenkante
- 88: obere Endfläche von 34

## Patentansprüche

1. Anbohrarmatur und Ventil mit einem Gehäuse (6), welches insbesondere durch Schweißen mit einem Rohr (4) verbindbar ist, enthaltend eine Führungsbuchse (24) und einen Ventilstutzen (8), in welchem ein Bohrer (34) mit einer Ventilspindel (42) axial bewegbar angeordnet ist, um das Rohr (4) anzubohren und ferner bedarfsweise einen in den Ventilstutzen mündenden Abzweigstutzen (10) abzusperren oder freizugeben, wobei die Führungsbuchse (24) für den Bohrer (34) in den Ventilstutzen (8) integriert ist und in diesem gegen axiale Bewegung und Drehung gesichert angeordnet ist, wobei die Führungsbuchse (24) sich zumindest über den Bereich des Ventilstutzens (8) erstreckt, in welchen der Abzweigstutzen (10) des Ventilstutzens (8) mündet, wobei ferner die Führungsbuchse (24) im Bereich des Abzweigstutzens (10) eine Öffnung (28) aufweist und am unteren, dem Rohr (4) zugewandten Ende (30), welches unterhalb des Abzweigstutzens (10) angeordnet ist, einen Ventilsitz (32) aufweist und wobei der Bohrer (34), insbesondere in einer Ringnut, einen Dichtring (38) aufweist, welcher an einer im Anschluß an den Ventilsitz (32) vorgesehenen zugeordneten weiteren Dichtfläche (39) am unteren Ende der Führungsbuchse (24) zur Anlage bringbar ist.

2. Anbohrarmatur nach Anspruch 1, **dadurch gekennzeichnet, daß** die Führungsbuchse (24) ein Innengewinde (68) aufweist, in welches der Bohrer (34) mit einem Außengewinde eingreift und/oder daß das Innengewinde (68) sich im wesentlichen über die gesamte Höhe der Führungsbuchse (24) erstreckt.

3. Anbohrarmatur nach Anspruch 1 oder 2, **dadurch gekennzeichnet**, daßdie Führungsbuchse (24), welche insbesondere aus Metall besteht, radial außen Verankerungsstege (26) aufweist, und/oder daß die Führungsbuchse (24) bei der Herstellung in das aus bevorzugt thermoplastischem Kunststoff bestehende Gehäuse (6) integriert ist und einschließlich der Verankerungsstege (26) vom Kunststoff des Ventilstutzens (8) umgeben ist.

4. Anbohrarmatur nach einem der Ansprüche 1 bis 3, **dadurch gekennzeichnet, daß** das Innengewinde (68) der Führungsbuchse (24) vom Ventilsitz (32) aus sich nach oben in den Bereich des Abzweigstutzens (10) erstreckt und/oder daß die Öffnung (28) das Innengewinde (68) durchdringt.

5. Anbohrarmatur nach einem der Ansprüche 1 bis 4, **dadurch gekennzeichnet, daß** der in die Führungsbuchse (24) integrierte Ventilsitz (32) im Bereich eines Sattels (12) oder in der Höhe desselben angeordnet ist, über welchen die Verbindung mit dem Rohr (4) erfolgt und/oder daß die Außenfläche der Führungsbuchse (24) bezogen auf eine Schnittebene quer zur Achse (18) des Ventilstutzens (8) die Form eines Vielecks, insbesondere eines Sechsecks, zumindest über einen Teilbereich der Gesamthöhe der Führungsbuchse (24) aufweist.

6. Anbohrarmatur nach einem der Ansprüche 1 bis 5,
**dadurch gekennzeichnet,**
**dass** anstelle des insbesondere in der Ringnut des Bohrers angeordneten Dichtringes ein mit dem Ventilsitz (32) verbundener Dichtring einer Dichtfläche des Ventilkörpers (36) zugeordnet ist.

7. Anbohrarmatur nach einem der Ansprüche 1 bis 6, **dadurch gekennzeichnet, daß** am oberen Ende des Ventilstutzens (8) eine Kappe (40), insbesondere mittels einer Schweißwicklung (64), flüssigkeitsdicht und/oder unlösbar befestigt ist, und daß die Ventilspindel (42) bezüglich der Kappe (40) axial bewegbar sowie drehbar durch diese hindurchgeführt ist und/oder daß die Kappe (40) an ihrer Innenfläche die Schweißwicklung (64) für eine dichte und feste Schweißverbindung mit der Außenfläche des Ventilstutzens (48) aufweist.

8. Anbohrarmatur nach einem der Ansprüche 1 bis 7, **dadurch gekennzeichnet, daß** am oberen Ende des Ventilstutzens (8) ein Ringkörper (55) angeordnet ist, welcher wenigstens einen Dichtring (56, 57) zur Abdichtung bezüglich der Ventilspindel (42) und/oder wenigstens einen Dichtring (58, 59) zur Abdichtung bezüglich der Innenfläche des Ventilstutzens (8) aufweist.

9. Anbohrarmatur nach einem der Ansprüche 1 bis 8, **dadurch gekennzeichnet, daß** die aus Kunststoff bestehende Ventilspindel (42) mit einem Vierkant (52) oder dergleichen zur Betätigung verbunden ist, wobei zweckmäßig mittels eines Stiftes (54) eine Sollbruchstelle vorgegeben ist.

10. Anbohrarmatur nach einem der Ansprüche 1 bis 9, **dadurch gekennzeichnet, daß** der Bohrer (34) eine gestufte Außenkontur derart aufweist, daß der mit dem Außengewinde (66) versehene Teil einen größeren Durchmesser aufweist als der die Schneide (80) enthaltende Teil, wobei im Übergangsbereich die bevorzugt konische Dichtfläche (72) angeordnet ist.

## Claims

1. Pipe tapping fitting and valve, comprising a housing (6) which can be connected to a pipe (4), in particular by welding, including a guide bush (24) and a valve connection (8) in which a drill (34) with a valve spindle (42) is arranged so that it is axially movable in order to tap the pipe (4) and furthermore, if necessary, to shut off or open a branch pipe (10) opening into the valve connection, wherein the guide bush (24) for the drill (34) is integrated into the valve connection (8) and is secured therein against axial movement and rotation, wherein the guide bush (24) extends at least over the region of the valve connection (8) into which the branch piece (10) of the valve connection (8) opens, that the guide bush (24) has an opening (28) in the region of the branch pipe (10) and has a valve seat (32) at the lower end (30) directed towards the pipe (4) and arranged below the branch piece (10), and wherein the drill (34), in particular in an annular groove, has a sealing ring (38), which can be brought to bear against a further associated sealing surface provided in connection to the valve seat at the lower end of the guide bush (24).

2. Pipe tapping fitting according to claim 1, **characterised in that** the guide bush (24) has an internal thread (68) engaged by the drill (34) via an external thread and/or that the internal thread (68) extends substantially over the entire height of the guide bush (24).

3. Pipe tapping fitting according to claim 1 or claim 2, **characterised in that** the guide bush (24), which consists in particular of metal, has radially external anchoring webs (26) and/or that the guide bush (24) is integrated into the housing (6) preferably consisting of thermoplastic at the time of manufacture and, together with the anchoring webs (26), is surrounded by the plastic of the valve connection (8).

4. Pipe tapping fitting according to one of claims 1 to 3, **characterised in that** the internal thread (68) of the guide bush (24) extends upwardly from the valve seat (32) into the region of the branch piece (10) and/or that the opening (28) passes through the internal thread (68).

5. Pipe tapping fitting according to one of claims 1 to 4, **characterised in that** the valve seat (32) integrated into the guide bush (24) is arranged in the region of a saddle (12) or level therewith, by means of which it is connected to the pipe (4) and/or that the outer surface of the guide bush (24) relative to a section plane transverse to the axis (18) of the valve connection (18) is in the form of a polygon, in particular a hexagon, at least over part of the overall height of the guide bush (24).

6. Pipe tapping fitting according to one of claims 1 to 5, **characterised in that**, instead of the sealing disposed, in particular, in the annular groove, a sealing ring connected to the valve seat (32) is associated with a sealing surface of the valve body (36).

7. Pipe tapping fitting according to one of claims 1 to 6, **characterised in that** a cap (40) is secured in a liquid-tight and/or permanent manner to the upper end of the valve connection (8), in particular by means of welding coil (64), and that the valve spindle (42) is passed through the cap (40) so that it is axially movable and rotatable relative thereto and/or that the cap (40) is provided on its inner surface with the welding coil (64) for a tight and firm welded joint with the outer surface of the valve connection (8).

8. Pipe tapping fitting according to one of claims 1 to 7, **characterised in that** an annular body (55) is arranged at the upper end of the valve connection (8) and has at least one sealing ring (56, 57) for sealing it off from the valve spindle (42) and/or at least one sealing ring (58, 59) for sealing it off from the other inner surface of the valve connection (8).

9. Pipe tapping fitting according to one of claims 1 to 8, **characterised in that** the valve spindle (42) consisting of plastic is connected to a square piece (53) or the like for actuation, a predetermined breaking point advantageously being provided by means of a pin (54).

10. Pipe tapping fitting according to one of claims 1 to 9, **characterised in that** the drill (34) has a stepped outer contour, such that the part provided with the external thread (66) has a larger diameter than the part containing the cutting edge (80), the preferably conical sealing surface (72) being arranged in the transition region.

## Revendications

1. Dérivation avec dispositif de perçage et vanne, avec un boîtier (6) qui peut se relier en particulier par soudure à un tube (4), comprenant une douille de guidage (24) et un raccord (8) de vanne, dans lequel est placé un dispositif de perçage (34) mobile dans le sens axial avec une tige (42) de vanne, pour percer le tube (4) et de plus, selon les besoins, fermer ou libérer un raccord de dérivation (10) débouchant dans le raccord de vanne, dans laquelle, la douille de guidage (24) du dispositif de perçage (34) est intégrée dans le raccord (8) de vanne et est immobilisée dans celui-ci contre un déplacement axial et une rotation, dans laquelle la douille de guidage (24) s'étend au moins sur la zone du raccord (8) de vanne dans laquelle débouche la raccord de dérivation (10) du raccord (8) de vanne, dans laquelle, de plus, la douille de guidage (24) présente une ouverture (28) au niveau du raccord de dérivation (10), et la douille de guidage (24) présente un siège (32) de vanne à l'extrémité inférieure (30) tournée vers le tube (4) et placée sous le raccord de dérivation (10) et dans laquelle le dispositif de perçage (34) présente, en particulier dans une rainure annulaire, une bague d'étanchéité (38) qui peut se mettre en appui contre une autre surface d'étanchéité (39) associée prévue à la suite du siège (32) de vanne, à l'extrémité inférieure de la douille de guidage (24).

2. Dérivation avec dispositif de perçage selon la revendication 1, ***caractérisé en ce que*** la douille de guidage (24) présente un filetage intérieur (68) dans lequel s'engage le dispositif de perçage (34) avec un filetage extérieur, et/ou ***en ce que*** le filetage intérieur (68) s'étend pour l'essentiel sur toute la hauteur de la douille de guidage (24).

3. Dérivation avec dispositif de perçage selon la revendication 1 ou 2, ***caractérisé en ce que*** la douille de guidage (24), qui est constituée en particulier en métal, présente des barres d'ancrage (26) à l'extérieur dans le sens radial, et/ou ***en ce que*** la douille de guidage (24) est intégrée lors de la fabrication dans le boîtier (6) constitué de préférence en matière synthétique thermoplastique, et est entouré, barres d'ancrage (26) comprises, par la matière synthétique du raccord (8) de vanne.

4. Dérivation avec dispositif de perçage selon l'une des revendications 1 à 3, ***caractérisé en ce que*** le filetage intérieur (68) de la douille de guidage (24) s'étend vers le haut depuis le siège (32) de vanne au niveau du raccord de dérivation (10), et/ou ***en ce que*** l'ouverture (28) traverse le filetage intérieur (68).

5. Dérivation avec dispositif de perçage selon l'une des revendications 1 à 4, ***caractérisé en ce que*** le siège (32) de vanne intégré à la douille de guidage (24) est placé au niveau ou à la hauteur d'un col (12) par l'intermédiaire duquel se fait la liaison avec le tube (4), et/ou ***en ce que*** la surface extérieure de la douille de guidage (24), par rapport à un plan de coupe transversal à l'axe (18) du raccord (8) de vanne, présente la forme d'un polygone, en particulier d'un hexagone, au moins sur une partie de la hauteur totale de la douille de guidage (24).

6. Dérivation avec dispositif de perçage selon l'une des revendications 1 à 5, ***caractérisé en ce que,*** au lieu de la bague d'étanchéité placée en particulier dans la rainure annulaire du dispositif de perçage, une bague d'étanchéité reliée au siège (32) de vanne est associée à une surface d'étanchéité du corps (36) de vanne.

7. Dérivation avec dispositif de perçage selon l'une des revendications 1 à 6, ***caractérisé en ce que,*** à l'extrémité supérieure du raccord (8) de vanne, il est fixé un capuchon (40), en particulier au moyen d'un joint de soudure (64), de manière étanche aux liquides et/ou inamovible, et ***en ce que*** la tige (42) de vanne traverse le capuchon (40) de manière mobile axialement et rotative par rapport à celui-ci, et/ou ***en ce que*** le capuchon (40) présente sur sa surface intérieure le joint de soudure (64) pour un assemblage soudé étanche et solide avec la surface extérieur du raccord (8) de vanne.

8. Dérivation avec dispositif de perçage selon l'une des revendications 1 à 7, ***caractérisé en ce qu***'à l'extrémité supérieure du raccord (8) de vanne, est placé un corps annulaire (55) qui présente au moins une bague d'étanchéité (56, 57) pour assurer l'étanchéité par rapport à la tige (42) de vanne et/ou au moins une bague d'étanchéité (58, 59) pour assurer l'étanchéité par rapport à la surface intérieure du raccord (8) de vanne.

9. Dérivation avec dispositif de perçage selon l'une des revendications 1 à 8, ***caractérisé en ce que*** la tige (42) de vanne en matière synthétique est reliée à un carré (52) ou autre destiné au maniement, un point de rupture imposé étant imposé de manière avantageuse au moyen d'un ergot (54).

10. Dérivation avec dispositif de perçage selon l'une des revendications 1 à 9, ***caractérisé en ce que*** le dispositif de perçage (34) présente un contour échelonné, de sorte que la partie munie du filetage extérieur (66) présente un plus grand diamètre que la partie présentant la lame (80), la surface d'étanchéité (72) de préférence conique étant placée dans la zone de transition.
